# EUROPEAN PATENT SPECIFICATION

(11) **EP 2 471 051 B1**
(45) Date of publication and mention of the grant of the patent: **28.03.2018**
(21) Application number: 09778131.4
(22) Date of filing: 26.08.2009
(51) Int. Cl.: G08B 25/01, G08G 1/123

(54) **SYSTEMS AND METHODS FOR EMERGENCY ARMING OF A NETWORK ACCESS DEVICE**
SYSTEME UND VERFAHREN ZUR NOTFALLSAKTIVIERUNG EINES NETZZUGANGSGERÄTS
SYSTÈMES ET PROCÉDÉS D'ENREGISTREMENT D'URGENCE D'UN DISPOSITIF D'ACCÈS RÉSEAU

(43) Date of publication of application: 04.07.2012
(73) Proprietor: Continental Automotive GmbH, 30165 Hannover (DE)
(72) Inventor: WESSELS, Gerhard, 85560 Ebersberg (DE); SCHAEFER, Ulrich, 85649 Brunnthal (DE); SCHMICKLER, Christoph, 85643 Steinhöring (DE)
(86) International application number: PCT/EP2009/006192
(87) International publication number: WO 2011/023207

(56) References cited:
- EP-A1- 1 054 371
- EP-A2- 1 843 306

## Description

### I. Background

The invention relates generally to the field of emergency registration of a vehicle network access device for an emergency or service call.

EP 1 843 306 A2 discloses a method for controlling an emergency device, comprising the two steps of detecting the occurrence of an emergency in an object and establishing a radio connection from the emergency device to an emergency call centre. Furthermore EP 1 843 306 A2 describes that the emergency device generates temporary identification data, in that the temporary identification data are assigned to the connection and are transmitted to the emergency call centre before transmission of at least a minimum item of data for authenticating the object and the location data obtained in order to describe the location of the object and that the temporary identification data are stored in the emergency device, for use in the event of any further need to establish the connection.

EP 1 054 371 A1 discloses an automatic alert system for vehicles. This system has a transmitter in the vehicle for automatically transmitting an emergency call to an external receiver and at least one transducer, both connected to a computer unit that activates the emergency call when activated by a signal. The emergency call system has an arrangement for determining a degree of probability of an imminent accident using the signals from the transducer and the emergency call can be activated if the degree of probability exceeds a threshold.

### II. Summary

In one respect, disclosed is a method for emergency registration of a vehicle network access device, the method comprising: monitoring one or more vehicle risk indicators; analyzing the one or more vehicle risk indicators for the likelihood of an emergency; and initiating registration of the vehicle network access device in response to the one or more vehicle risk indicators exceeding a probability threshold for an emergency. In another respect, disclosed is an apparatus for emergency network access registration, the apparatus comprising: one or more processors; one or more memory units coupled to the one or more processors; a vehicle network access device coupled to the one or more processors; the apparatus being configured to: monitor one or more vehicle risk indicators; analyze the one or more vehicle risk indicators for the likelihood of an emergency; and cause a registration of the vehicle network access device in response to the one or more vehicle risk indicators exceeding a probability threshold for an emergency. In yet another respect, disclosed is a computer program product stored on a computer operable medium, the computer program product comprising software code being effective to register a vehicle network access device prior to an emergency by being effective to: monitor one or more vehicle risk indictors; analyze the one or more vehicle risk indicators for the likelihood of the emergency; and cause a registration of the vehicle network access device in response to the one or more vehicle risk indicators exceeding a probability threshold for an emergency. Numerous additional embodiments are also possible.

### III. Brief Description of the Drawings

Other objects and advantages of the invention may become apparent upon reading the detailed description and upon reference to the accompanying drawings.
Figure 1 is a block diagram illustrating a system for emergency registration of a vehicle network access device based on one or more risk indicators, in accordance with some embodiments.
Figure 2 is a block diagram illustrating an apparatus for emergency network access registration based on one or more risk indicators, in accordance with some embodiments.
Figure 3 is a flow diagram illustrating a method for emergency registration of a network access device, in accordance with some embodiments.
Figure 4 is a flow diagram illustrating a method for emergency registration of a vehicle network access device based on one or more risk indicators, in accordance with some embodiments.
Figure 5 is a flow diagram illustrating an alternative embodiment of a method for emergency registration of a vehicle network access device based on one or more risk indicators, in accordance with some embodiments.

While the invention is subject to various modifications and alternative forms, specific embodiments thereof are shown by way of example in the drawings and the accompanying detailed description. It should be understood, however, that the drawings and detailed description are not intended to limit the invention to the particular embodiments. This disclosure is instead intended to cover all modifications, equivalents, and alternatives falling within the scope of the present invention as defined by the appended claims.

### IV. Detailed Description

One or more embodiments of the invention are described below. It should be noted that these and any other embodiments are exemplary and are intended to be illustrative of the invention rather than limiting. While the invention is widely applicable to different types of systems, it is impossible to include all of the possible embodiments and contexts of the invention in this disclosure. Upon reading this disclosure, many alternative embodiments of the present invention will be apparent to persons of ordinary skill in the art.

In some embodiments, the vehicle risk indicators are monitored for the probability for the occurrence of an accident. The vehicle risk indicators may comprise brake force indication, vehicle stability, radar sensors, speed, tire pressure sensors, cameras, lane departure warning system, driver drowsiness detection, warning lights, voice recognition, car to car communication, and steering angle. If the probability exceeds a threshold, then the registration of the vehicle network access device is initiated. The probability threshold may be exceeded if for example the tire pressure sensor suddenly registers a drastic change in tire pressure. The sudden change in tire pressure could be a result of a tire puncture or blowout. After such an event, registration of the vehicle network access device would be initiated. The vehicle risk indicators are continued to be monitored to determine whether or not to stream the accident or emergency information. Another example of a vehicle risk indicator that could possibly initiate the vehicle network access registration is the brake force indication. If the brakes are applied with maximum force, the probability threshold for an emergency may be exceeded and therefore vehicle network access initiated. These are only a couple of examples where the vehicle risk indicators could exceed the probability threshold for an emergency.

In some embodiments, the emergency arming of a network access device may relieve the network carriers from having to register a device that a majority of the time will not be communicating on the network. Network carriers do not want, especially if the network access devices are not communicating and generating revenue for the network carriers, and in some cases cannot handle the registration of all the network access devices for all the vehicles on the road.

In some embodiments, the emergency arming of a network access device may reduce the time it takes to start streaming the accident information after an accident has occurred. By starting to register the network access device based on the risk indicators of the vehicle, if an accident does indeed occur, then the disabled vehicle may be able to start streaming the accident information sooner after the accident, instead of having to first wait for the network access registration. Typically, it takes at least one minute to register the vehicle network access device to the network and place a call. The time saved by the emergency arming of a network access device may be very valuable in being able to respond to the accident.

In some embodiments, the emergency arming of a network access device may be able to alert emergency responders to a potentially catastrophic accident. If the network access is abruptly terminated as a result of the destruction of the vehicle's network access device during the crash, then the network carrier may be able to alert emergency responders just on the basis that the vehicle's network access was registered due to the high probability of a crash based on one or more risk indicators.

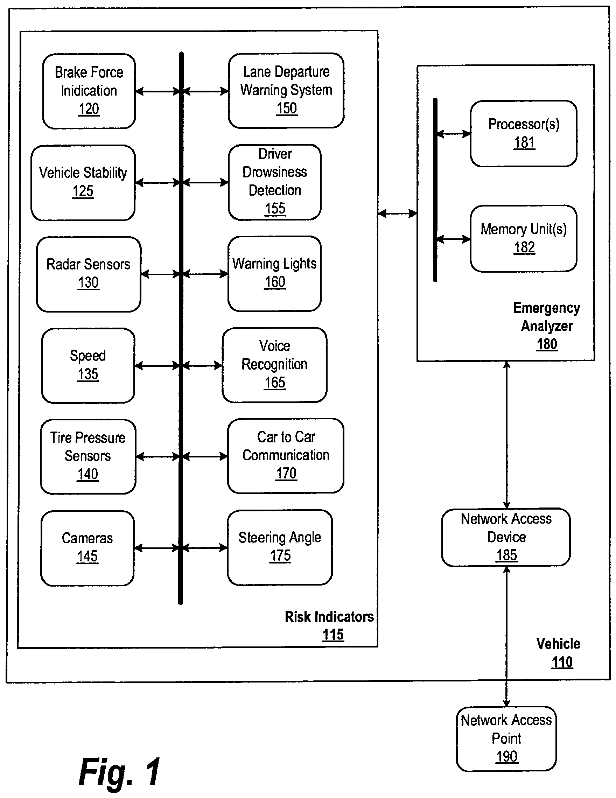

Figure 1 is a block diagram illustrating a system for emergency registration of a vehicle network access device based on one or more risk indicators, in accordance with some embodiments.

In some embodiments, vehicle 110 comprises risk indicators 115. The risk indicators comprise brake force indication 120, vehicle stability 125, radar sensors 130, speed 135, tire pressure sensors 140, cameras 145, lane departure warning system 150, driver drowsiness detection 155, warning lights 160, voice recognition 165, car to car communication 170, and steering angle 175. The risk indicators 115 are analyzed with an emergency analyzer 180 to determine when there is a high likelihood of a crash. The emergency analyzer is comprised of one or more processors 181 and one or more memory units 182. If it is determined that a high likelihood of a crash exists, then registration of a vehicle network access device 185 to a network access point 190 is initiated.

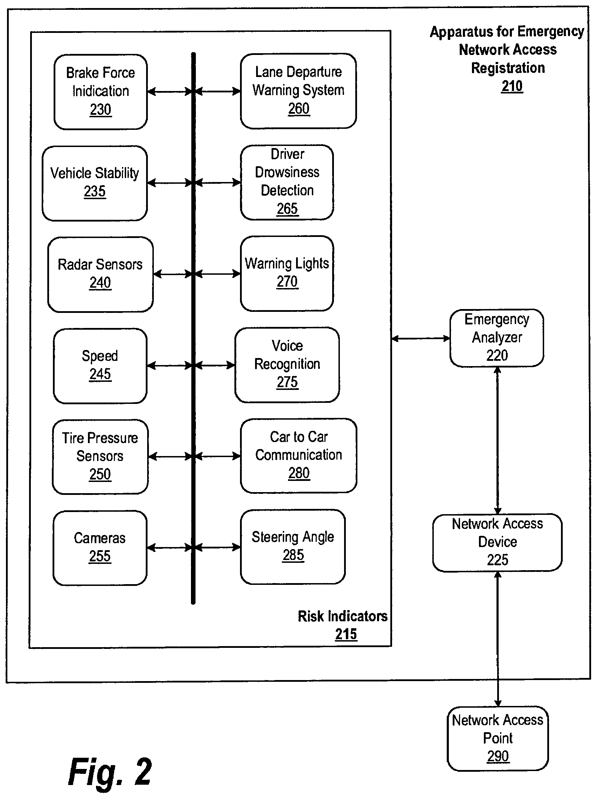

Figure 2 is a block diagram illustrating an apparatus for emergency network access registration based on one or more risk indicators, in accordance with some embodiments.

In some embodiments, an apparatus for emergency network access registration 210 comprises risk indicators 215, an emergency analyzer 220 and a network access device 225. The risk indicators comprise brake force indication 230, vehicle stability 235, radar sensors 240, speed 245, tire pressure sensors 250, cameras 255, lane departure warning system 260, driver drowsiness detection 265, warning lights 270, voice recognition 275, car to car communication 280, and steering angle 285. The risk indicators 215 are analyzed with the emergency analyzer 220 to determine when there is a high likelihood of a crash. If it is determined that a high likelihood of a crash exists, then registration of the network access device 225 to a network access point 290 is initiated.

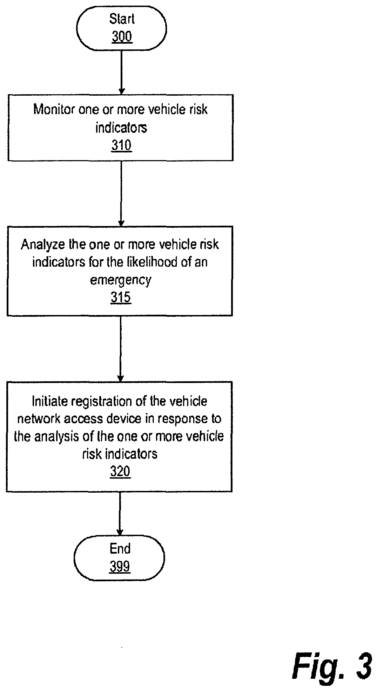

Figure 3 is a flow diagram illustrating a method for emergency registration of a network access device, in accordance with some embodiments. In some embodiments, the method illustrated in Figure 3 may be performed by one or more of the devices illustrated in Figure 1 and Figure 2. Processing begins at 300 whereupon, at block 310 one or more vehicle risk indicators are monitored. At block 315, the one or more vehicle risk indicators are analyzed for the likelihood of an emergency. At block 320, registration of the vehicle network access is initiated in response to the analysis of the one or more vehicle risk indicators. Processing subsequently ends at 399.

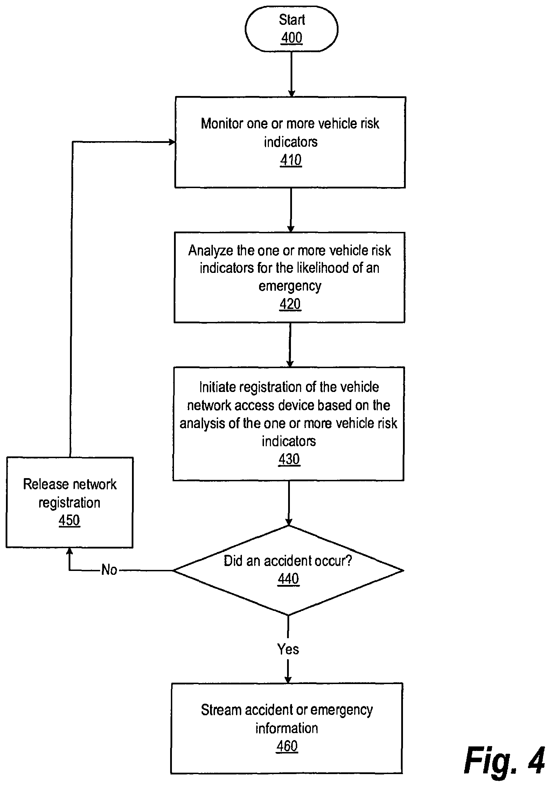

Figure 4 is a flow diagram illustrating a method for emergency registration of a vehicle network access device based on one or more risk indicators, in accordance with some embodiments.

Processing begins at 400 whereupon, at block 410, one or more vehicle risk indicators are monitored. In block 420, one or more vehicle risk indicators are analyzed for the likelihood of an emergency. In block 430 the registration of the vehicle network access device is initiated based on the analysis of the one or more vehicle risk indicators. Next it is determined whether an accident occurred 440. If an accident did not occur, the network registration is released 450. If an accident did occur, then the accident or emergency information may be streamed 460 to the service center.

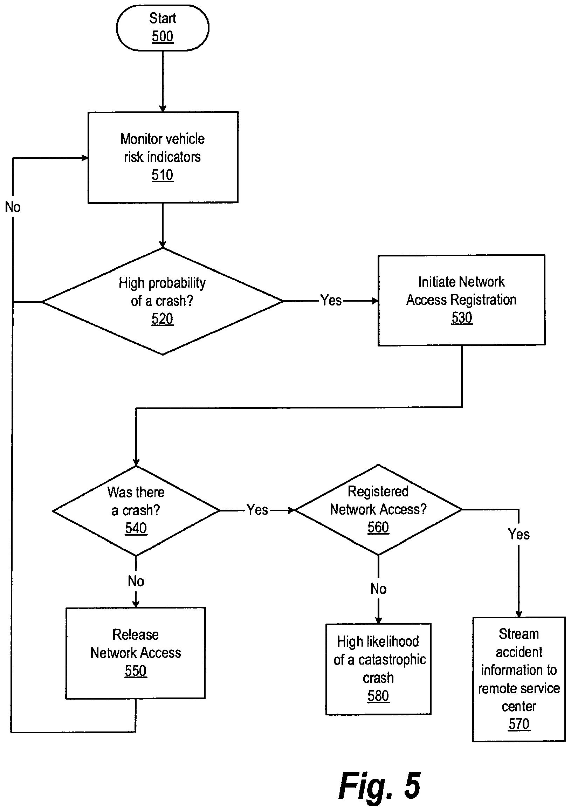

Figure 5 is a flow diagram illustrating an alternative embodiment of a method for emergency registration of a vehicle network access device based on one or more risk indicators, in accordance with some embodiments.

Processing begins at 500 whereupon, at block 510, the vehicle risk indicators are monitored. The risk indicators are used in determining the likelihood of a crash in block 520. If there is not a high likelihood of a crash, then the risk indicators are continued to be monitored by returning to block 510. If there is a high likelihood of a crash, then network access registration is initiated in block 530. In block 540, the risk indicators are analyzed to determine whether a crash occurred. If the analysis of the risk indicators do not show a crash has occurred, then the network access is released in block 550 and the risk indicators are continued to be monitored in block 510. If a crash did occur, network access is checked in block 560. If there is network access, then the accident information is streamed to a remote service center in block 570. In block 580, if there is no network access, then there is a high likelihood that a catastrophic crash had occurred that may have abruptly terminated the network access. The service center that initially received the network access registration in block 530 will then at least know that there was at least a high probability of a crash based on the risk indicators prior to the abrupt termination of the network access and based on this information, the service center may be able to alert emergency responders.

The previous description of the disclosed embodiments is provided to enable any person skilled in the art to make or use the present invention. Various modifications to these embodiments will be readily apparent to those skilled in the art, and the generic principles defined herein may be applied to other embodiments without departing from the spirit or scope of the invention. Thus, the present invention is not intended to be limited to the embodiments shown herein but is to be accorded the widest scope consistent with the principles and novel features disclosed herein.

The benefits and advantages that may be provided by the present invention have been described above with regard to specific embodiments. These benefits and advantages, and any elements or limitations that may cause them to occur or to become more pronounced are not to be construed as critical, required, or essential features of any or all of the claims. As used herein, the terms "comprises," "comprising," or any other variations thereof, are intended to be interpreted as non-exclusively including the elements or limitations which follow those terms. Accordingly, a system, method, or other embodiment that comprises a set of elements is not limited to only those elements, and may include other elements not expressly listed or inherent to the claimed embodiment.

While the present invention has been described with reference to particular embodiments, it should be understood that the embodiments are illustrative and that the scope of the invention is not limited to these embodiments. Many variations, modifications, additions and improvements to the embodiments described above are possible. It is contemplated that these variations, modifications, additions and improvements fall within the scope of the invention as detailed within the following claims.

## Claims

1. A method (300) for emergency registration of a vehicle network access device, the method comprising:
monitoring one or more vehicle risk indicators (310);
analyzing the one or more vehicle risk indicators for the likelihood of an emergency (315); the method being **characterised by** the step of initiating registration of the vehicle network access device in response to the one or more vehicle risk indicators exceeding a probability threshold for an emergency (320).

2. The method of Claim 1, where monitoring the one or more vehicle risk indicators comprises at least one of: brake force indication, vehicle stability, radar sensors, speed, tire pressure sensors, cameras, lane departure warning system, driver drowsiness detection, warning lights, voice recognition, car to car communication, and steering angle.

3. The method of Claim 1, where the method further comprises releasing the network registration if the emergency did not occur (450).

4. The method of Claim 1, where the method further comprises streaming accident information if the emergency did occur (460).

5. An apparatus for emergency network access registration, the apparatus comprising:
one or more processors (181);
one or more memory units (182) coupled to the one or more processors;
a vehicle network access device (185) coupled to the one or more processors;
the apparatus being configured to:
monitor one or more vehicle risk indicators;
analyze the one or more vehicle risk indicators for the likelihood of an emergency;
and cause a registration of the vehicle network access
device in response to the one or more vehicle risk indicators exceeding a probability threshold for an emergency.

6. The apparatus of Claim 5, where the apparatus being configured to monitor the one or more vehicle risk indicators comprises at least one of: brake force indication, vehicle stability, radar sensors, speed, tire pressure sensors, cameras, lane departure warning system, driver drowsiness detection, warning lights, voice recognition, car to car communication, and steering angle.

7. The apparatus of Claim 5, where the apparatus is further configured to release network registration if the emergency did not occur.

8. The apparatus of Claim 5, where the apparatus is further configured to stream accident information if the emergency did occur.

9. The apparatus of Claim 5, further comprising a vehicle, where the apparatus is mounted to the vehicle.

10. A computer program product stored on a computer operable medium, the computer program product comprising software code being effective to register a vehicle network access device prior to an emergency by being effective to:
monitor one or more vehicle risk indictors;
analyze the one or more vehicle risk indicators for the likelihood of the emergency;
and cause a registration of the vehicle network access device in response to the one or more vehicle risk indicators exceeding a probability threshold for an emergency.

11. The computer program product of Claim 10, where the software code is further effective to monitor the one or more vehicle risk indicators comprises monitoring at least one of: brake force indication, vehicle stability, radar sensors, speed, tire pressure sensors, cameras, lane departure warning system, driver drowsiness detection, warning lights, voice recognition, car to car communication, and steering angle.

12. The computer program product of Claim 10, where the software code is further effective to release network registration if the emergency did not occur.

13. The computer program product of Claim 10, where the software code is further effective to stream accident information if the emergency did occur.

## Patentansprüche

1. Verfahren (300) zur Notfallregistrierung eines Fahrzeug-Netzzugangsgeräts, wobei das Verfahren aufweist:
Überwachen eines oder mehrerer Fahrzeugrisikoindikatoren (310) ;
Analysieren der ein oder mehreren Fahrzeugrisikoindikatoren auf die Wahrscheinlichkeit eines Notfalls (315);
wobei das Verfahren **gekennzeichnet ist durch** den Schritt:
Veranlassen der Registrierung des Fahrzeug-Netzzugangsgeräts in Reaktion darauf, dass die ein oder mehreren Fahrzeugrisikoindikatoren einen Wahrscheinlichkeitsschwellenwert für einen Notfall überschreiten (320).

2. Verfahren nach Anspruch 1, wobei das Überwachen der ein oder mehreren Fahrzeugrisikoindikatoren wenigstens eines der Folgenden aufweist: Bremskraftanzeige, Fahrzeugstabilität, Radarsensoren, Geschwindigkeit, Reifendrucksensoren, Kameras, Spurhalte-Warnsystem, Fahrermüdigkeitserkennung, Warnleuchten, Spracherkennung, Fahrzeug-zu-Fahrzeug-Kommunikation und Lenkwinkel.

3. Verfahren nach Anspruch 1, wobei das Verfahren ferner aufweist, die Netzregistrierung aufzuheben, falls der Notfall nicht eingetreten ist (450).

4. Verfahren nach Anspruch 1, wobei das Verfahren ferner aufweist, Unfallinformationen zu streamen, falls der Notfall eingetreten ist (460).

5. Vorrichtung zur Notfall-Netzzugangsregistrierung, wobei die Vorrichtung aufweist:
einen oder mehrere Prozessoren (181);
eine oder mehrere Speichereinheiten (182), die mit den ein oder mehreren Prozessoren verbunden sind;
ein Fahrzeug-Netzzugangsgerät (185), das mit den ein oder mehreren Prozessoren verbunden ist;
wobei die Vorrichtung ausgebildet ist zum:
Überwachen eines oder mehrerer Fahrzeugrisikoindikatoren;
Analysieren der ein oder mehreren Fahrzeugrisikoindikatoren auf die Wahrscheinlichkeit eines Notfalls;
und Veranlassen einer Registrierung des Fahrzeug-Netzzugangsgeräts in Reaktion darauf, dass die ein oder mehreren Fahrzeugrisikoindikatoren einen Wahrscheinlichkeitsschwellenwert für einen Notfall überschreiten.

6. Vorrichtung nach Anspruch 5, wobei die Vorrichtung ausgebildet ist, die ein oder mehreren Fahrzeugrisikoindikatoren zu überwachen, was wenigstens eines der Folgenden aufweist: Bremskraftanzeige, Fahrzeugstabilität, Radarsensoren, Geschwindigkeit, Reifendrucksensoren, Kameras, Spurhalte-Warnsystem, Fahrermüdigkeitserkennung, Warnleuchten, Spracherkennung, Fahrzeug-zu-Fahrzeug-Kommunikation und Lenkwinkel.

7. Vorrichtung nach Anspruch 5, wobei die Vorrichtung ferner dafür ausgebildet ist, die Netzregistrierung aufzuheben, falls der Notfall nicht eingetreten ist.

8. Vorrichtung nach Anspruch 5, wobei die Vorrichtung ferner dafür ausgebildet ist, Unfallinformationen zu streamen, falls der Notfall eingetreten ist.

9. Vorrichtung nach Anspruch 5, ferner ein Fahrzeug aufweisend, wobei die Vorrichtung am Fahrzeug montiert ist.

10. Computerprogrammprodukt, das auf einem von einem Computer betreibbaren Medium gespeichert ist, wobei das Computerprogrammprodukt Softwarecode aufweist, der wirksam ist, um ein Fahrzeug-Netzzugangsgerät im Vorfeld eines Notfalls zu registrieren, indem es wirksam ist zum:
Überwachen eines oder mehrerer Fahrzeugrisikoindikatoren;
Analysieren der ein oder mehreren Fahrzeugrisikoindikatoren auf die Wahrscheinlichkeit des Notfalls;
und Veranlassen einer Registrierung des Fahrzeug-Netzzugangsgeräts in Reaktion darauf, dass die ein oder mehreren Fahrzeugrisikoindikatoren einen Wahrscheinlichkeitsschwellenwert für einen Notfall überschreiten.

11. Computerprogrammprodukt nach Anspruch 10, wobei der Softwarecode ferner wirksam ist, die ein oder mehreren Fahrzeugrisikoindikatoren zu überwachen, was das Überwachen von wenigstens einem der Folgenden aufweist: Bremskraftanzeige, Fahrzeugstabilität, Radarsensoren, Geschwindigkeit, Reifendrucksensoren, Kameras, Spurhalte-Warnsystem, Fahrermüdigkeitserkennung, Warnleuchten, Spracherkennung, Fahrzeug-zu-Fahrzeug-Kommunikation und Lenkwinkel.

12. Computerprogrammprodukt nach Anspruch 10, wobei der Softwarecode ferner wirksam ist, die Netzregistrierung aufzuheben, falls der Notfall nicht eingetreten ist.

13. Computerprogrammprodukt nach Anspruch 10, wobei der Softwarecode ferner wirksam ist, Unfallinformationen zu streamen, falls der Notfall eingetreten ist.

## Revendications

1. Procédé (300) pour l'enregistrement d'urgence d'un dispositif d'accès à un réseau de véhicules, le procédé comprenant les étapes suivantes :
surveiller un ou plusieurs indicateurs de risque du véhicule (310) ;
analyser les un ou plusieurs indicateurs de risque du véhicule pour déterminer la probabilité d'une situation urgence (315) ;
le procédé étant **caractérisé par** l'étape suivante :
initier l'enregistrement du dispositif d'accès à un réseau de véhicules en réponse aux un ou plusieurs indicateurs de risque du véhicule dépassant un seuil de probabilité pour une situation d'urgence (320).

2. Procédé selon la revendication 1, dans lequel la surveillance d'un ou plusieurs indicateurs de risque du véhicule comprend la surveillance d'au moins un des éléments suivants : l'indication de force de freinage, la stabilité du véhicule, les capteurs radar, la vitesse, les capteurs de pression des pneus, les caméras, le système d'avertissement de sortie de voie, la détection de somnolence du conducteur, les voyants d'avertissement, la reconnaissance vocale, les communications de voiture à voiture et l'angle de braquage.

3. Procédé selon la revendication 1, dans lequel le procédé comprend en outre de libérer l'enregistrement au réseau si la situation d'urgence ne s'est pas produite (450).

4. Procédé selon la revendication 1, dans lequel le procédé comprend en outre de diffuser en continu des informations relatives à l'accident si la situation d'urgence s'est produite (460) .

5. Appareil pour l'enregistrement d'un accès à un réseau de secours, l'appareil comprenant :
un ou plusieurs processeurs (181) ;
une ou plusieurs unités de mémoire (182) couplées aux un ou plusieurs processeurs ;
un dispositif d'accès à un réseau de véhicules (185) couplé aux un ou plusieurs processeurs ;
l'appareil étant configuré pour :
surveiller un ou plusieurs indicateurs de risque de véhicule ;
analyser les un ou plusieurs indicateurs de risque de véhicule pour déterminer la probabilité d'une situation d'urgence ; et
causer l'enregistrement du dispositif d'accès à un réseau de véhicules en réponse aux un ou plusieurs indicateurs de risque du véhicule dépassant un seuil de probabilité pour une situation d'urgence.

6. Appareil selon la revendication 5, où l'appareil étant configuré pour surveiller les un ou plusieurs indicateurs de risque du véhicule qui comprennent au moins l'un des éléments suivants : l'indication de force de freinage, la stabilité du véhicule, les capteurs radar, la vitesse, les capteurs de pression des pneus, les caméras, le système d'avertissement de sortie de voie, la détection de somnolence du conducteur, les voyants d'avertissement, la reconnaissance vocale, les communications de voiture à voiture et l'angle de braquage.

7. Appareil selon la revendication 5, où l'appareil est en outre configuré pour libérer l'enregistrement au réseau si la situation d'urgence ne s'est pas produite.

8. Appareil selon la revendication 5, où l'appareil est en outre configuré pour diffuser en continu des informations relatives à l'accident si la situation d'urgence s'est produite.

9. Appareil selon la revendication 5, comprenant en outre un véhicule, où l'appareil est monté sur le véhicule.

10. Produit programme informatique stocké sur un support exploitable par un ordinateur, le produit programme informatique comprenant un code logiciel permettant d'enregistrer un dispositif d'accès à un réseau de véhicules avant qu'une situation d'urgence soit effective pour :
surveiller les un ou plusieurs indicateurs de risque du véhicule ;
analyser les un ou plusieurs indicateurs de risque du véhicule pour déterminer la probabilité de la situation d'urgence ; et
causer l'enregistrement du dispositif d'accès à un réseau de véhicules en réponse aux un ou plusieurs indicateurs de risque du véhicule dépassant un seuil de probabilité pour une situation d'urgence.

11. Produit programme informatique selon la revendication 10, dans lequel le code logiciel permet en outre de surveiller les un ou plusieurs indicateurs de risque du véhicule comprenant la surveillance d'au moins un des éléments suivants : l'indication de force de freinage, la stabilité du véhicule, les capteurs radar, la vitesse, les capteurs de pression des pneus, les caméras, le système d'avertissement de sortie de voie, la détection de somnolence du conducteur, les voyants d'avertissement, la reconnaissance vocale, les communications de voiture à voiture et l'angle de braquage.

12. Produit programme informatique selon la revendication 10, dans lequel le code logiciel permet en outre de libérer l'enregistrement au réseau si la situation d'urgence ne s'est pas produite.

13. Produit programme informatique selon la revendication 10, dans lequel le code logiciel permet en outre de diffuser en continu des informations relatives à l'accident si la situation d'urgence s'est produite.
